# EUROPEAN PATENT APPLICATION

(11) **EP 4 557 438 A1**
(43) Date of publication of application: **21.05.2025**
(21) Application number: 23839435.7
(22) Date of filing: 23.06.2023
(51) Int. Cl.: H01M 10/058, H01M 10/0562, H01M 50/121

(54) **PACKAGED SOLID-STATE BATTERY**

(30) Priority: 11.07.2022 JP 2022111323
(71) Applicant: Murata Manufacturing Co., Ltd., Nagaokakyo-shi, Kyoto 617-8555 (JP)
(72) Inventor: NAGANO, Takayuki, Nagaokakyo-shi, Kyoto 617-8555 (JP)
(74) Representative: Reddie & Grose LLP
(86) International application number: PCT/JP2023/023290
(87) International publication number: WO 2024/014261

(57) **Abstract**

Provided is a packaged solid-state battery including a substrate, a solid-state battery with an end surface electrode provided on the substrate, and an exterior portion covering the solid-state battery. The exterior portion contains a resin. A gap portion is included between the end surface electrode and the exterior portion.

## Description

### TECHNICAL FIELD

The present disclosure relates to a packaged solid-state battery. More specifically, the present disclosure relates to a packaged solid-state battery to be adapted for mounting on a substrate.

### BACKGROUND ART

Conventionally, secondary batteries that can be repeatedly charged and discharged have been used for various applications. For example, secondary batteries are used as power sources of electronic devices such as smart phones and notebook computers.

In a secondary battery, a liquid electrolyte is generally used as a medium for ion transfer contributing to charging and discharging. That is, a so-called electrolytic solution is used for the secondary battery. However, in such a secondary battery, safety is generally required in terms of preventing leakage of the electrolytic solution. Since an organic solvent or the like used for the electrolytic solution is a flammable substance, safety is required also in that respect.

Therefore, a solid-state battery using a solid electrolyte instead of the electrolytic solution has been studied.

### PRIOR ART DOCUMENT

### PATENT DOCUMENT

Patent Document 1: Japanese Patent Application Laid-Open (Translation of PCT Application) No. 2010-503957

### SUMMARY OF THE INVENTION

### Problem to be solved by the invention

The solid-state battery may be mounted on a substrate such as printed wiring board or the like together with other electronic components. The solid-state battery disposed on a substrate can be covered with a covering member in order to prevent permeation of water vapor (Patent Document 1). The covering member is provided so as to also cover the end surface electrode provided in the solid-state battery. In this case, the end surface electrode is in physical contact with the solid-state battery, and can be deformed along with expansion and contraction of the solid-state battery during charging and discharging. On the other hand, the covering member is disposed on the solid-state battery with the end surface electrode interposed therebetween in the region covering the end surface electrode. Therefore, the covering member is inferior in followability to expansion and contraction of the solid-state battery as compared with the end surface electrode, and may act to prevent deformation of the end surface electrode. As a result, distortion may occur inside the end surface electrode, and the end surface electrode may be damaged.

The present invention has been made in view of such problems. That is, a main object of the present disclosure is to provide a packaged solid-state battery having a reduced risk of breakage of an end surface electrode due to expansion and contraction of the solid-state battery.

### Means for solving the problem

To achieve the above object, in an embodiment of the present disclosure,
there is provided a packaged solid-state battery including:
a substrate, a solid-state battery with an end surface electrode provided on the substrate, and an exterior portion covering the solid-state battery,
the exterior portion including a resin; and
a gap portion between the end surface electrode and the exterior portion.

### Advantageous effect of the invention

The packaged solid-state battery according to an embodiment of the present disclosure can reduce the risk of breakage of the end surface electrode due to expansion and contraction of the solid-state battery.

### BRIEF EXPLANATION OF DRAWINGS

FIG. 1 is a sectional view schematically illustrating the internal configuration of a solid-state battery.
FIG. 2 is a sectional view schematically illustrating the configuration of a packaged solid-state battery according to an embodiment of the present disclosure.
FIG. 3 is an enlarged sectional view schematically illustrating a portion A of the packaged solid-state battery shown in FIG. 2.
FIG. 4 is an enlarged sectional view schematically illustrating a portion A of a packaged solid-state battery according to another embodiment of the present disclosure.
FIG. 5 is a sectional view schematically illustrating the configuration of a packaged solid-state battery according to an embodiment of the present disclosure.
FIG. 6 is an enlarged sectional view schematically illustrating a portion B of the packaged solid-state battery shown in FIG. 5.
FIG. 7A is a step sectional view schematically illustrating a process for manufacturing a packaged solid-state battery according to an embodiment of the present disclosure.
FIG. 7B is a step sectional view schematically illustrating a process for manufacturing a packaged solid-state battery according to an embodiment of the present disclosure.
FIG. 7C is a step sectional view schematically illustrating a process for manufacturing a packaged solid-state battery according to an embodiment of the present disclosure.
FIG. 7D is a step sectional view schematically illustrating a process for manufacturing a packaged solid-state battery according to an embodiment of the present disclosure.
FIG. 7E is a step sectional view schematically illustrating a process for manufacturing a packaged solid-state battery according to an embodiment of the present disclosure.

### MODE FOR CARRYING OUT THE INVENTION

Hereinafter, a packaged solid-state battery according to the present disclosure will be described in detail. Although the description will be made with reference to the drawings as necessary, the illustrated contents are only schematically and exemplarily illustrated for the understanding of the present disclosure, and the appearance, the dimensional ratio, or the like may be different from the actual ones.

The "packaged solid-state battery" as used in the present description refers, in a broad sense, to a solid-state battery device configured to protect the solid-state battery from the external environments, and in a narrow sense, to a solid-state battery device that includes a mountable substrate and protects the solid-state battery from the external environment.

The "sectional view" as used in the present description is based on a form (briefly, a form in the case of being cut along a plane parallel to the layer thickness direction) viewed from a direction substantially perpendicular to the stacking direction in the stacked structure of the solid-state battery. In addition, the "plan view" or "plan view shape" used in the present description is based on a sketch drawing when an object is viewed from an upper side or a lower side along the layer thickness direction (that is, the stacking direction mentioned above).

The "vertical direction" and "horizontal direction" used directly or indirectly in the present description correspond to a vertical direction and a horizontal direction in the drawings, respectively. Unless otherwise specified, the same reference numerals or symbols indicate the same members/portions or the same semantic contents.
In a preferred aspect, it can be understood that a downward direction in a vertical direction (that is, a direction in which gravity acts) corresponds to a "downward direction"/a "bottom surface side", and the opposite direction thereof corresponds to an "upward direction"/a "top surface side".

In addition, in the present description, the ""on" a member such as a substrate, a solid-state battery, or a layer" includes not only a case of being in contact with the upper surface of the member but also a case of not being in contact with the upper surface of the member. That is, ""on" a member such as a substrate, a solid-state battery, or a layer" includes a case where a new member is formed above the member and/or a case where another member is interposed between the members. In addition, the "on" does not necessarily mean the upper side in the vertical direction. "On" merely indicates a relative positional relationship of a plurality of members.

### [Basic Configuration of Secondary Battery]

The "secondary battery" as used in the present description refers to a battery that can be repeatedly charged and discharged. Accordingly, the secondary battery according to the present disclosure is not excessively limited by its name, and for example, a power storage device and the like can also be included in the subject of the present disclosure.

The "solid-state battery" as used in the present disclosure refers to, in a broad sense, a battery with the constituent elements being solid and refers to, in a narrow sense, all solid-state battery with the constituent elements (particularly preferably all constituent elements) being solid. In a preferred aspect, the solid-state battery in the present disclosure is a stacked solid-state battery configured such that layers constituting a battery constituent unit are stacked with each other, and preferably such layers are formed of a fired body. The "solid-state battery" encompasses not only a so-called "secondary battery" that can be repeatedly charged and discharged but also a "primary battery" that can only be discharged. According to a preferred aspect of the present disclosure, the "solid-state battery" is a secondary battery. The "secondary battery" is not excessively restricted by its name, which can encompass, for example, a power storage device and the like. In the present disclosure, the solid-state battery included in the package can also be referred to as a "solid-state battery element".

Hereinafter, the basic configuration of the solid-state battery according to the present disclosure will be first described. The configuration of the solid-state battery described here is merely an example for understanding the invention, and not considered limiting the invention.

### [Basic Configuration of Solid-State Battery]

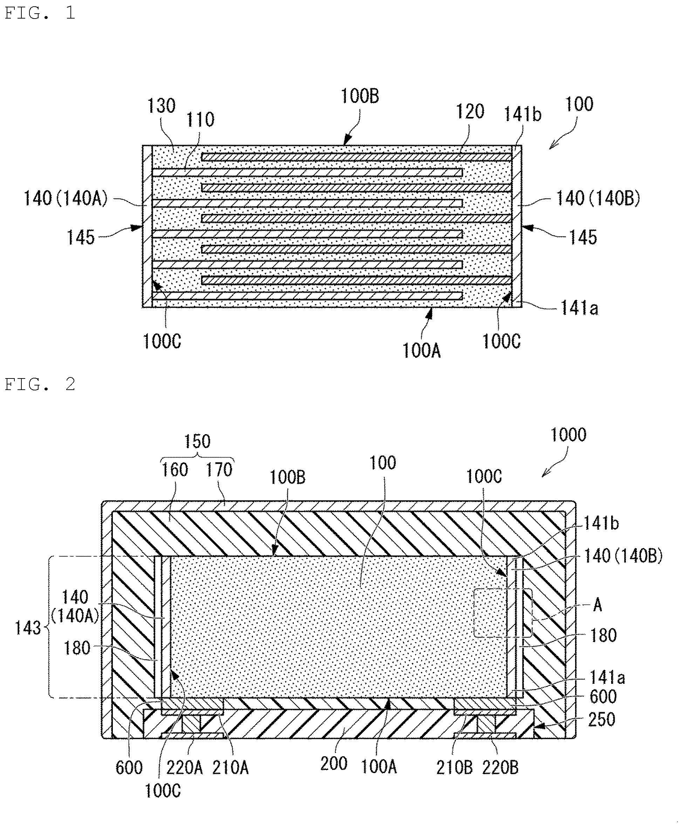

The solid-state battery includes at least electrode layers of a positive electrode and a negative electrode and a solid electrolyte. Specifically, as illustrated in FIG. 1, a solid-state battery 100 includes a solid-state battery stack including a battery constituting unit composed of a positive electrode layer 110, a negative electrode layer 120, and a solid electrolyte 130 at least interposed between the electrode layers.

For the solid-state battery, each layer constituting the solid-state battery may be formed by firing, and the positive electrode layer, the negative electrode layer, the solid electrolyte, and the like may form fired layers. Preferably, the positive electrode layer, the negative electrode layer, and the solid electrolyte are each fired integrally with each other, and thus, the solid-state battery stack preferably forms an integrally fired body.

The positive electrode layer is an electrode layer containing at least a positive electrode active material. The positive electrode layer may further contain a solid electrolyte. In a preferred aspect, the positive electrode layer is formed of a fired body including at least positive electrode active material particles and solid electrolyte particles. In contrast, the negative electrode layer is an electrode layer containing at least a negative electrode active material. The negative electrode layer may further contain a solid electrolyte. In a preferred aspect, the negative electrode layer is formed of a sintered body including at least negative electrode active material particles and solid electrolyte particles.

The positive electrode active material and the negative electrode active material are substances involved in the transfer of electrons in the solid-state battery. Ions move (conduct) between the positive electrode layer and the negative electrode layer with the solid electrolyte interposed therebetween to accept and donate electrons, thereby charging and discharging are performed. Each electrode layer of the positive electrode layer and the negative electrode layer is preferably a layer capable of occluding and releasing lithium ions or sodium ions, in particular. That is, the solid-state battery is preferably an all-solid-state secondary battery in which lithium ions or sodium ions can move between the positive electrode layer and the negative electrode layer with the solid electrolyte interposed therebetween to charge and discharge the battery.

### (Positive Electrode Active Material)

Examples of the positive electrode active material included in the positive electrode layer include at least one type selected from the group consisting of lithium-containing phosphate compounds that have a NASICON-type structure, lithium-containing phosphate compounds that have an olivine-type structure, lithium-containing layered oxides, and lithium-containing oxides that have a spinel-type structure. Examples of the lithium-containing phosphate compounds that have a NASICON-type structure include Li₃V₂(PO₄)₃. Examples of the lithium-containing phosphate compounds that have an olivine-type structure include Li₃Fe₂(PO₄)₃, LiFePO₄, and/or LiMnPO₄. Examples of the lithium-containing layered oxides include LiCoO₂ and/or LiCo_{1/3}Ni_{1/3}Mn_{1/3}O₂. Examples of the lithium-containing oxides that have a spinel-type structure include LiMn₂O₄ and/or LiNi_{0.5}Mn_{1.5}O₄. The type of the lithium compounds is not particularly limited, and may be regarded as, for example, a lithium-transition metal composite oxide and a lithium-transition metal phosphate compound. The lithium-transition metal composite oxide is a generic term for oxides containing lithium and one or two or more types of transition metal elements as constituent elements, and the lithium transition metal phosphate compound is a generic term for phosphate compounds containing lithium and one or two or more types of transition metal elements as constituent elements. The types of transition metal elements are not particularly limited and are, for example, cobalt (Co), nickel (Ni), manganese (Mn), iron (Fe), and the like.

In addition, examples of positive electrode active materials capable of occluding and releasing sodium ions include at least one selected from the group consisting of sodium-containing phosphate compounds that have a NASICON-type structure, sodium-containing phosphate compounds that have an olivine-type structure, sodium-containing layered oxides, and sodium-containing oxides that have a spinel-type structure. For example, in the case of the sodium-containing phosphate compounds, examples thereof include at least one type selected from the group consisting of Na₃V₂(PO₄)₃, NaCoFe₂(PO₄)₃, Na₂Ni₂Fe(PO₄)₃, Na₃Fe₂(PO₄)₃, Na₂FeP₂O₇, Na₄Fe₃(PO₄)₂(P₂O₇), and NaFeO₂ as a sodium-containing layered oxide.

In addition, the positive electrode active material may be, for example, an oxide, a disulfide, a chalcogenide, a conductive polymer, or the like. The oxide may be, for example, a titanium oxide, a vanadium oxide, a manganese dioxide, or the like. The disulfide is, for example, a titanium disulfide, a molybdenum sulfide, or the like. The chalcogenide may be, for example, a niobium selenide or the like. The conductive polymer may be, for example, a disulfide, a polypyrrole, a polyaniline, a polythiophene, a poly-para-styrene, a polyacetylene, a polyacene, or the like.

### (Negative Electrode Active Material)

Examples of the negative electrode active material included in the negative electrode layer include at least one type selected from the group consisting of oxides containing at least one type of element selected from the group consisting of titanium (Ti), silicon (Si), tin (Sn), chromium (Cr), iron (Fe), niobium (Nb), and molybdenum (Mo), carbon materials such as graphite, graphite-lithium compounds, lithium alloys, lithium-containing phosphate compounds that have a NASICON-type structure, lithium-containing phosphate compounds that have an olivine-type structure, and lithium-containing oxides that have a spinel-type structure. Examples of the lithium alloys include Li-Al. Examples of the lithium-containing phosphate compounds that have a NASICON-type structure include Li₃V₂(PO₄)₃ and/or LiTi₂(PO₄)₃. Examples of the lithium-containing phosphate compounds that have an olivine-type structure include Li₃Fe₂(PO₄)₃ and/or LiCuPO₄. Examples of the lithium-containing oxides that have a spinel-type structure include Li₄Ti₅O₁₂.

In addition, examples of negative electrode active materials capable of occluding and releasing sodium ions include at least one type selected from the group consisting of sodium-containing phosphate compounds that have a NASICON-type structure, sodium-containing phosphate compounds that have an olivine-type structure, and sodium-containing oxides that have a spinel-type structure.

Further, in the solid-state battery, the positive electrode layer and the negative electrode layer are made of the same material.

The positive electrode layer and/or the negative electrode layer may include a conductive material. Examples of the conductive material included in the positive electrode layer and the negative electrode layer include at least one type of metal materials such as silver, palladium, gold, platinum, aluminum, copper, and nickel, and carbon.

Further, the positive electrode layer and/or the negative electrode layer may include a sintering aid. Examples of the sintering aid include at least one type selected from the group consisting of a lithium oxide, a sodium oxide, a potassium oxide, a boron oxide, a silicon oxide, a bismuth oxide, and a phosphorus oxide.

The thicknesses of the positive electrode layer and negative electrode layer are not particularly limited, but may be each independently, for example, 2 µm or more and 50 µm or less, particularly 5 µm or more and 30 µm or less.

### (Positive Electrode Current Collecting Layer/Negative Electrode Current Collecting Layer)

Although not an essential element for the electrode layer, the positive electrode layer and the negative electrode layer may respectively include a positive electrode current collecting layer and a negative electrode current collecting layer. The positive electrode current collecting layer and the negative electrode current collecting layer may each have the form of a foil. The positive electrode current collecting layer and the negative electrode current collecting layer may each have, however, the form of a fired body, if more importance is placed on viewpoints such as improving the electron conductivity, reducing the manufacturing cost of the solid-state battery, and/or reducing the internal resistance of the solid-state battery by integral firing. As the positive electrode current collector constituting the positive electrode current collecting layer and the negative electrode current collector constituting the negative electrode current collector, it is preferable to use a material with a high conductivity, and for example, silver, palladium, gold, platinum, aluminum, copper, and/or nickel may be used. The positive electrode current collector and the negative electrode current collector may each have an electrical connection portion for being electrically connected to the outside, and may be configured to be electrically connectable to an end surface electrode. When the positive electrode current collecting layer and the negative electrode current collecting layer have the form of a fired body, the layers may be formed of a fired body including a conductive material and a sintering aid. The conductive material included in the positive electrode current collecting layer and the negative electrode current collecting layer may be selected from, for example, the same materials as the conductive materials that can be included in the positive electrode layer and the negative electrode layer. The sintering aid included in the positive electrode current collecting layer and the negative electrode current collecting layer may be selected from, for example, the same materials as the sintering aids that can be included in the positive electrode layer/the negative electrode layer. As described above, in the solid-state battery, the positive electrode current collecting layer and the negative electrode current collecting layer are not essential, and a solid-state battery provided without such a positive electrode current collecting layer or a negative electrode current collecting layer is also conceivable. More particularly, the solid-state battery included in the package of the present disclosure may be a solid-state battery without any current collecting layer.

### (Solid Electrolyte)

The solid electrolyte is a material capable of conducting lithium ions or sodium ions. In particular, the solid electrolyte that forms a battery constituent unit in the solid-state battery may form a layer capable of conducting lithium ions between the positive electrode layer 110 and the negative electrode layer 120 (refer to FIG. 1). The solid electrolyte may be only provided at least between the positive electrode layer and the negative electrode layer. More particularly, the solid electrolyte may be present around the positive electrode layer and/or the negative electrode layer so as to protrude from between the positive electrode layer and the negative electrode layer. Specific examples of the solid electrolyte include any one type, or two or more types of a crystalline solid electrolyte, a glass-based solid electrolyte, and a glass ceramic-based solid electrolyte.

Examples of the crystalline solid electrolyte include oxide-based crystal materials and sulfide-based crystal materials. Examples of the oxide-based crystal materials include lithium-containing phosphate compounds that have a NASICON structure, oxides that have a perovskite structure, oxides that have a garnet-type or garnet-type similar structure, and oxide glass ceramic-based lithium ion conductors.

Examples of the lithium-containing phosphate compound that has a NASICON structure include LiₓM_{y}(PO₄)₃ (1 ≤ x ≤ 2, 1 ≤ y ≤ 2, M is at least one type selected from the group consisting of titanium (Ti), germanium (Ge), aluminum (Al), gallium (Ga), and zirconium (Zr)). An example of the lithium-containing phosphate compound having a NASICON structure includes Li_{1.2}Al_{0.2}Ti_{1.8}(PO₄)₃. An example of the oxides that have a perovskite structure includes La_{0.55}Li_{0.35}TiO₃. An example of the oxides that have a garnet-type or garnet-type similar structure include Li₇La₃Zr₂O₁₂. In addition, examples of the sulfide-based crystal materials include thio-LISICON, for example, Li_{3.25}Ge_{0.25}P_{0.75}S₄ and Li₁₀GeP₂S₁₂. The crystalline solid electrolyte may contain a polymer material (for example, a polyethylene oxide (PEO)).

Examples of the glass-based solid electrolyte include oxide-based glass materials and sulfide-based glass materials. Examples of the oxide-based glass materials include 50Li₄SiO₄-50Li₃BO₃. In addition, examples of the sulfide-based glass materials include 30Li₂S-26B₂S₃-44LiI, 63Li₂S-36SiS₂-1Li₃PO₄, 57Li₂S-38SiS₂-5Li₄SiO₄, 70Li₂S-3OP₂S₅, and 50Li₂S-50GeS₂.

Examples of the glass ceramic-based solid electrolyte include oxide-based glass ceramic materials and sulfide-based glass ceramic materials. As the oxide-based glass ceramic materials, for example, a phosphate compound (LATP) containing lithium, aluminum, and titanium as constituent elements, and a phosphate compound (LAGP) containing lithium, aluminum, and germanium as constituent elements can be used. LATP is, for example, Li_{1.07}Al_{0.69}Ti_{1.46}(PO₄)₃. LAGP is, for example, Li_{1.5}A1_{0.5}Ge_{1.5}(PO₄). In addition, examples of the sulfide-based glass ceramic materials include Li₇P₃3₁₁ and Li_{3.25}P_{0.95}S₄.

In addition, examples of the solid electrolyte capable of conducting sodium ions include sodium-containing phosphate compounds that have a NASICON structure, oxides that have a perovskite structure, and oxides that have a garnet-type or garnet-type similar structure. Examples of the sodium-containing phosphate compounds that have a NASICON structure include NaₓM_{y}(PO₄)₃(1 ≤ x ≤ 2, 1 ≤ y ≤ 2, and M is at least one type selected from the group consisting of Ti, Ge, Al, Ga, and Zr).

The solid electrolyte may include a sintering aid. The sintering aid included in the solid electrolyte may be selected from, for example, the same materials as the sintering aids, which can be included in the positive electrode layer or the negative electrode layer.

The thickness of the solid electrolyte is not particularly limited. The thickness of the solid electrolyte located between the positive electrode layer and the negative electrode layer may be, for example, 1 µm or more and 15 µm or less, particularly 1 µm or more and 5 µm or less.

### (End Surface Electrode)

The solid-state battery 100 is typically provided with an end surface electrodes 140. In particular, the end surface electrode 140 is provided on side surface 100C of the solid-state battery 100. More specifically, a positive-electrode-side end surface electrode 140A connected to the positive electrode layer 110 and a negative-electrode-side end surface electrode 140B connected to the negative electrode layer 120 are provided (refer to FIG. 1). Such an end surface electrode preferably contains a material that is high in conductivity. The specific material of the end surface electrodes is not particularly limited, but examples thereof include at least one type selected from the group consisting of silver, gold, platinum, aluminum, copper, tin, and nickel.

### [Basic Configuration of Packaged Solid-State Battery]

According to the present disclosure, the solid-state battery is packaged. That is, the solid-state battery is a packaged solid-state battery including a mountable substrate and having a configuration in which the solid-state battery is protected from an external environment.

FIG. 2 is a sectional view schematically illustrating the configuration of a packaged solid-state battery according to an embodiment of the present disclosure. As shown, the packaged solid-state battery 1000 according to an embodiment of the present disclosure includes a substrate 200 such that the solid-state battery 100 is supported. Specifically, the packaged solid-state battery 1000 includes the mountable substrate 200 and the solid-state battery 100 provided on the substrate 200 and protected from an external environment.

As illustrated in FIG. 2, the substrate 200 has, for example, a larger main surface than the solid-state battery. The substrate 200 may be a resin substrate or a ceramic substrate. In short, the substrate 200 may fall in the category such as a printed wiring board, a flexible substrate, an LTCC substrate, or an HTCC substrate. If the substrate 200 is a resin substrate, the substrate 200 may be a substrate formed to include a resin as a base material, for example, a substrate that has a laminated structure including therein a resin layer. The resin material of such a resin layer may be any thermoplastic resin and/or any thermosetting resin. In addition, the resin layer may be formed by impregnating a glass fiber cloth with a resin material such as an epoxy resin, for example.

The substrate preferably serves as a member for an external terminal of the packaged solid-state battery. More particularly, the substrate can be also considered as a terminal substrate for an external terminal of the solid-state battery. The packaged solid-state battery provided with such a substrate can be mounted on another secondary substrate such as a printed wiring board, in such a form of interposing the substrate between the solid-state battery and the secondary substrate. For example, the solid-state battery can be surface-mounted with the substrate interposed therebetween, through solder reflow and the like. For the reasons described above, the packaged solid-state battery according to the present invention is preferably a surface-mount-device (SMD) type battery package.

Such a substrate can be provided so as to support the solid-state battery, and can thus also be understood as a support substrate. In addition, the substrate preferably has, because of serving as a terminal substrate, a wiring, an electrode, and the like, and in particular, preferably includes an electrode layer that electrically connects upper and lower surfaces or upper and lower surface layers. In a preferred aspect, the substrate includes wiring or an electrode layer that electrically wires the upper and lower surfaces of the substrate, and is a terminal substrate for an external terminal of the packaged solid-state battery. Such an aspect enables the wiring of the substrate to be used for extension from the solid-state battery to the external terminal, and thus requires no extension to the outside of an exterior portion while packing with the exterior portion described later, thereby increasing the design freedom of the external terminal.

The substrate 200 according to a preferred embodiment includes electrode layers (upper main surface electrode layer 210 and lower main surface electrode layer 220) that electrically connects the upper and lower main surfaces of the substrate, and serves as a member for an external terminal of the packaged solid-state battery (refer to FIG. 2). In the packaged solid-state battery including such a substrate, the electrode layers of the substrate and terminal parts of the solid-state battery are connected to each other. Preferably, the electrode layers of the substrate and the end surface electrodes of the solid-state battery are electrically connected to each other. For example, the positive-electrode-side end surface electrode 140A of the solid-state battery is electrically connected to the positive-electrode-side electrode layers (210A, 220A) of the substrate. In contrast, the negative-electrode-side end surface electrode 140B of the solid-state battery is electrically connected to the negative-electrode-side electrode layers (210B, 220B) of the substrate. Thus, the positive-electrode-side and negative-electrode-side electrode layers (in particular, the electrode layers located on the lower side or bottom side of the packaged product, or lands connected thereto) of the substrate are provided respectively as a positive electrode terminal and a negative electrode terminal for the packaged solid-state battery.

As shown in FIG. 2, for enabling electrical connection between the solid-state battery 100 and the substrate electrode layers 210 of the substrate 200, the end surface electrodes 140 of the solid-state battery 100 and the substrate electrode layers 210 of the substrate 200 can be connected with a bonding member 600 interposed therebetween. The bonding member 600 is responsible for at least electrical connection between the end surface electrodes 140 of the solid-state battery 100 and the substrate 200, and may include, for example, a conductive adhesive. As an example, the bonding member 600 may be made of an epoxy-based conductive adhesive containing a metal filler such as Ag.

Further, in an embodiment of the present disclosure, not only the substrate 200 but also the packaged solid-state battery 1000 itself may be configured to prevent permeation of water vapor as a whole. For example, the solid-state battery package 1000 according to an embodiment of the present disclosure is covered with an exterior portion 150 such that the whole of the solid-state battery 100 provided on the substrate 200 is surrounded. That is, the "exterior portion" in the present description refers to a covering member that surrounds the solid-state battery 100 on the substrate 200, and the "exterior portion" can also be referred to as a "covering portion" or a "package portion". Specifically, packaging can be performed such that the solid-state battery 100 on the substrate 200 have a main surface 100A and a side surface 100C surrounded by the exterior portion 150. Such a configuration makes none of the surfaces that form the solid-state battery 100 exposed to the outside, thus allowing water vapor permeation (that is, ingress of water vapor into the solid-state battery) to be suitably prevented.

The "water vapor" as used herein is not particularly limited to water in a gaseous state, and also encompasses water in a liquid state and the like. More particularly, the term "water vapor" is used to broadly encompass water in a gaseous state, water in a liquid state, and the like, regardless of the physical state. Accordingly, the "water vapor" can also be referred to as moisture or the like, and in particular, water in a liquid state can also encompass dew condensation water obtained by condensation of water in a gaseous state. The penetration of water vapor into the solid-state battery causes battery characteristics to be degraded, and thus, the form of the packaged solid-state battery as described above contributes to prolonging the life of the battery characteristics of the solid-state battery.

For example, as illustrated in FIG. 2, the exterior portion 150 can be composed of a covering insulating layer 160 and a covering inorganic layer 170. The solid-state battery 100 may have a form covered with the covering insulating layer 160 and covering inorganic layer 170 as the exterior portion 150. The covering inorganic layer 170 is provided so as to cover the covering insulating layer 160. The covering inorganic layer 170 is positioned on the covering insulating layer 160, and thus has the form of largely wrapping the solid-state battery 100 on the substrate 200 as a whole together with the covering insulating layer 160. Furthermore, the covering inorganic layer 170 may has the form of also covering a side surface 250 of the substrate 200. The covering insulating layer 160 is formed so as to form a preferred water vapor barrier in cooperation with the covering inorganic layer 170, and the covering inorganic layer 170 is also formed so as to form a preferred water vapor barrier in cooperation with the covering insulating layer 160. It is to be noted that the covering insulating layer 160 may reach the side surfaces 250 of the substrate. In other words, the covering insulating layer 160 covering the top-surface region 100B and side-surface region 100C of the solid-state battery may also cover the side surface 250 of the substrate, and the covering inorganic layer 170 may be provided on the covering insulating layer 160.

The material of the covering insulating layer may be any type as long as the material exhibits an insulating property. For example, the covering insulating layer may include a resin, and the resin may be either a thermosetting resin or a thermoplastic resin. The covering insulating layer may include an inorganic filler. By way of example only, the covering insulating layer may be made of an epoxy-based resin containing an inorganic filler such as SiC.

The material of the covering inorganic layer is not particularly limited, and may be, for example, a metal, glass, an oxide ceramic, or a mixture thereof. The covering inorganic layer may correspond to an inorganic layer that has the form of a thin film, which is, for example, a metal film. For example, the covering inorganic layer can be a plating film containing at least one type selected from the group consisting of Cu (copper), Sn (tin), Zn (zinc), Bi (bismuth), Au (gold), Ag (silver), Ni (nickel), Cr (chromium), Pd (palladium), and Pt (platinum) as a main ingredient. In a preferred aspect, the covering inorganic layer is formed of a plated Cu-based and/or Ni-based material having a thickness of 2 µm or more and 50 µm or less.

### [Features of Packaged Solid-State Battery of Present Disclosure]

The inventor of the present application has intensively studied a solution for reducing a risk of breakage of the end surface electrode 140 due to expansion and contraction of the packaged solid-state battery 1000 associated with charging and discharging in the packaged solid-state battery 100 described above, and as a result, has devised the present invention having the following technical idea.

The present disclosure has a technical idea of "having a structure including a gap between an end surface electrode and an exterior portion". More specifically, the present disclosure has a technical idea of "a gap portion is included between the end surface electrode and the exterior portion, and the end surface electrode and the exterior portion are separated from each other by the gap portion".

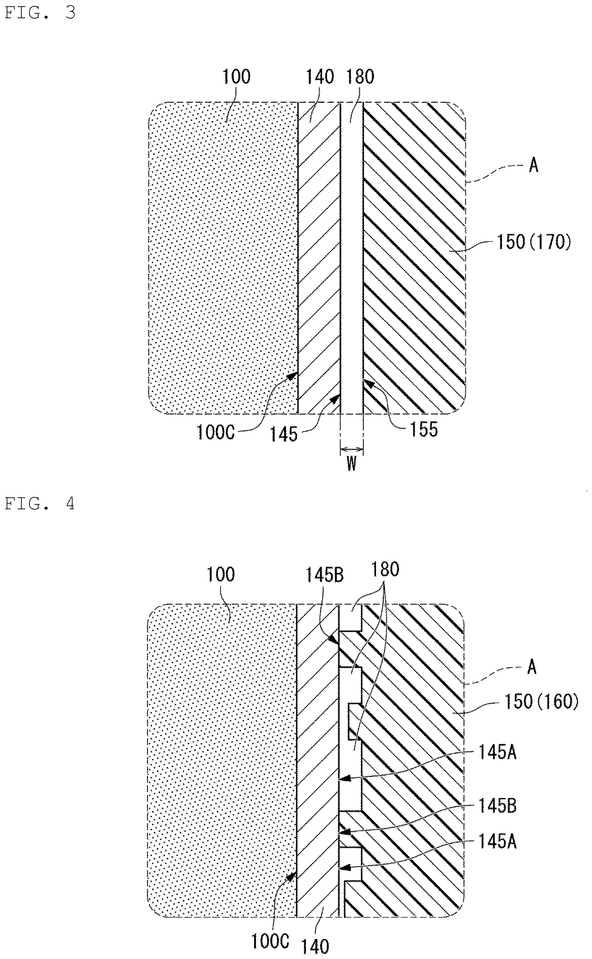

For achieving the technical idea described above, the present disclosure has the following technical feature. As shown in FIG. 2, the solid-state battery 100 disposed on the substrate 200 includes the end surface electrode 140 provided on the side surface 100C of the solid-state battery 100. The exterior portion 150 is provided so as to surround the solid-state battery 100 on the substrate 200 together with the end surface electrode 140. FIG. 3 is an enlarged cross-sectional view schematically showing a part A which is a part of a boundary region between the end surface electrode 140 and the exterior portion 150 in the packaged solid-state battery 1000 shown in FIG. 2. As shown in FIGS. 2 and 3, a gap portion 180 is included between the end surface electrode 140 and the exterior portion 150. That is, the end surface electrode 140 and the exterior portion 150 may face each other with the gap portion 180 interposed therebetween. In other words, the exterior portion 150 may be provided so as to cover the solid-state battery 100 in a state where a gap is formed between the exterior portion 150 and the end surface electrode 140 with the gap portion 180 interposed therebetween.

In such a configuration, the end surface electrode 140 and the exterior portion 150 may be separated from each other with the gap portion 180 interposed therebetween. That is, the packaged solid-state battery of the present disclosure includes a portion where the solid-state battery 100 and exterior portion 150 face each other while being separated from each other, and a portion where the solid-state battery 100 and the exterior portion 150 are in contact with each other. In such a configuration, the oppositely spaced portions may be located between the end surface electrode 140 and the exterior portion 150. In short, the packaged solid-state battery of the present disclosure includes a portion where the end surface electrode 140 and the exterior portion 150 face each other while being separated from each other. This means that the exterior portion 150 can be provided so as to cover the solid-state battery with the end surface electrode in a state of being at least partly separated from the end surface electrode 140.

The solid-state battery 100 covered with the exterior portion 150 includes a first main surface 100A facing the substrate 200 and a second main surface 100B positioned facing the first main surface 100A. That is, assuming a typical solid-state battery having two opposing main surfaces, the second main surface 100B positioned to face the substrate 200 is a main surface on the mounting surface side in the SMD type, and may also be referred to as a "bottom surface" or a "lower surface". The second main surface 100B refers to a main surface located on the opposite side of the first main surface 100A, and can also be referred to as a "top surface", or an "upper surface".

The "side surface of the solid-state battery" means a surface connecting first main surface 100A and second main surface 100B. In an embodiment of the present disclosure, the end surface electrode 140 may be provided on each of two side surfaces 100C of the solid-state battery 100 facing each other. Specifically, as shown in FIG. 1, the positive-side end surface electrode 140A connected to the positive electrode layer 110 and the negative-side end surface electrode 140B connected to the negative electrode layer 120 may be disposed on two side surfaces 100C facing each other. In the present disclosure, a gap portion 180 may be provided in at least one of the positive-side end surface electrode 140A and the negative-side end surface electrode 140B. That is, the exterior portion 150 may cover the solid-state battery in a state of including a portion facing and separated from at least one of the positive-electrode-side end surface electrode 140A and the negative-electrode-side end surface electrode 140B.

As described above, the exterior portion 150 may include the covering insulating layer 160. In a preferred aspect, the covering insulating layer 160 is provided so as to cover the solid-state battery 100, and the covering inorganic layer 170 is provided on the covering insulating layer 160. In such an aspect, the end surface electrode 140 may include the gap portion 180 between the end surface electrode and the covering insulating layer 160. In other words, the end surface electrode 140 and the covering insulating layer 160 may face each other while being separated from each other with the gap portion 180 interposed therebetween.

A force that is pulled in the expansion and contraction direction of the solid-state battery 100 may act on the end surface electrode 140. When the solid-state battery 100 expands and contracts in the stacking direction of the electrode layers, the expansion and contraction direction is the same as the extending direction of the end surface electrode 140 (refer to FIG. 1). That is, the expansion and contraction direction can be understood as the same direction as the extending direction of the side surface 100C of the solid-state battery. On the side surface 100C of the solid-state battery, the end surface electrode 140 is bonded to the solid-state battery 100. On the other hand, the exterior portion 150 is disposed on the solid-state battery 100 with the end surface electrode 140 interposed therebetween in the region covering the end surface electrode 140. As compared with the end surface electrode 140 physically in contact with the solid-state battery 100, a force acting in the extending direction of the end surface electrode 140 due to expansion and contraction of the solid-state battery is less likely to propagate to the exterior portion 150. Therefore, the exterior portion 150 may be inferior in followability to expansion and contraction of the solid-state battery 100.

As described above, the exterior portion 150 is inferior to the end surface electrode 140 in followability to expansion and contraction of the solid-state battery 100. Therefore, when the end surface electrode 140 and exterior portion 150 are joined to each other, the exterior portion 150 constrains the end surface electrode 140 at a joint surface (that is, the outer side surface 145 of the end surface electrode) with the end surface electrode 140, and can suppress deformation of the end surface electrode 140 following expansion and contraction of the solid-state battery 100. As a result, when the solid-state battery 100 expands and contracts, the outer side surface 145 of the end surface electrode 140 is less likely to deform due to restraint by the exterior portion 150, while an inner side surface of the end surface electrode 140 physically joined to the solid-state battery 100 is likely to deform following the expansion and contraction. As a result, the inner side surface of the end surface electrode 140 and the outer side surface 145 of the end surface electrode joined to the exterior portion 150 have different ease of deformation, and as a result the inside of the end surface electrode 140 may be distorted, and the end surface electrode 140 may be damaged.

According to the configuration of the present disclosure, the outer side surface 145 of the end surface electrode located on the exterior portion 150 side includes a portion separated from the exterior portion 150 by the gap portion 180, and thus the outer surface of the end surface electrode is not constrained by the exterior portion 150 in the separation portion. That is, providing the gap portion 180 between the end surface electrode 140 and the exterior portion 150 allows the restraint of the outside of the end surface electrode 140 by the exterior portion 150 to be alleviated as a whole. Therefore, when the end surface electrode 140 is deformed due to a volume change such as expansion and contraction of the solid-state battery 100, the influence of the restraint by the exterior portion 150 can be reduced. As a result, distortion in the end surface electrode 140 due to expansion and contraction of the solid-state battery 100 is suppressed, and a risk of breakage of the end surface electrode 140 can be reduced. Further, reducing such strain allows fatigue of the end surface electrode 140 due to repetition of expansion and contraction of the solid-state battery 100 to be reduced. Therefore, deterioration, peeling, and the like of the end surface electrode 140 are suppressed, and the long-term reliability of the packaged solid-state battery can be improved.

As shown in FIG. 2, the exterior portion 150 is in physical contact with the second main surface 100B of the solid-state battery. Therefore, when the solid-state battery 100 expands and contracts in the stacking direction of the electrode layers, the exterior portion 150 located on the second main surface 100B of the solid-state battery can suitably follow and deform along the expansion and contraction direction of the solid-state battery 100. Further, the exterior portion 150 is also bonded to the substrate 200 on which the solid-state battery 100 is disposed. Such bonding can play a role of assisting suitable holding of the exterior portion 150 on the solid-state battery 100. Therefore, also in the aspect in which the gap portion 180 is formed between the end surface electrode 140 and the exterior portion 150 as described above, the exterior portion 150 can be suitably held on the solid-state battery 100 without being easily damaged and/or peeled off due to deformation accompanying expansion and contraction of the solid-state battery.

The end surface electrode 140 and exterior portion 150 are not necessarily separated from each other in a complete manner. In other words, the end surface electrode 140 may be partly in contact with the exterior portion 150. In one embodiment, the end surface electrode 140 includes a non-contact portion 145A and a contact portion 145B with the exterior portion 150 (refer to FIG. 4). According to such a configuration, the contact portion 145B can contribute to support of the exterior portion 150 on the end surface electrode 140. For example, when stress is applied to the vicinity of the gap portion 180, the stress is suitably dispersed in the end surface electrode 140 and/or the exterior portion 150 by the contact portion 145B, and breakage of the end surface electrode 140 and the exterior portion 150 can be prevented. The exterior portion 150 is supported by the contact portion 145B on the end surface electrode 140, and thus the strength of the exterior portion 150 can be improved as a whole. Further, in the contact portion 145B, the end surface electrode 140 can be sandwiched on the solid-state battery 100 by the exterior portion 150. The contact portion 145B between the end surface electrode 140 and the exterior portion 150 can suitably hold the end surface electrode 140 on the solid-state battery and contribute to prevention of peeling of the end surface electrode 140 from the solid-state battery.

For example, a contact portion between the end surface electrode 140 and the exterior portion 150 may be at least end portion 141 of the end surface electrode 140. Specifically, the end surface electrode 140 may be in contact with the exterior portion 150 at at least one of a substrate side end portion 141a located on the first main surface 100A side of the solid-state battery and a top surface side end portion 141b located on the second main surface 100B side. The "top surface side end portion" and the "bottom surface side end portion" correspond to an end portion 141 located on the distal side with respect to the substrate 200 and an end portion 141 located on the proximal side with respect to the substrate 200, respectively, in the end surface electrode 140. That is, the contact portion between the end surface electrode 140 and the exterior portion 150 may be positioned at the end portion 141 of the end surface electrode positioned on the second main surface 100B side and/or the substrate 200 side of the solid-state battery.

As described above, the exterior portion 150 includes the contact portion with the end portion 141 of the end surface electrode, whereby the joint portion between the end portion 141 of the end surface electrode and the solid-state battery 100 is covered with the exterior portion 150. According to such a structure, the end portion 141 of the end surface electrode can be suitably sandwiched between the solid-state batteries by the exterior portion 150. Therefore, it is possible to suitably prevent the end surface electrode from being peeled off from the solid-state battery due to expansion and contraction of the solid-state battery 100. Further, the exterior portion 150 covers the joint between the end portion 141 of the end surface electrode and the solid-state battery 100, whereby invasion of water vapor into the solid-state battery 100 from the joint between the end surface electrode 140 and the solid-state battery 100 can be suitably suppressed. That is, according to the present disclosure, it is possible to provide a packaged solid-state battery that achieves both a reduction in the risk of breakage of the end surface electrode due to expansion and contraction and prevention of water vapor invasion into the solid-state battery.

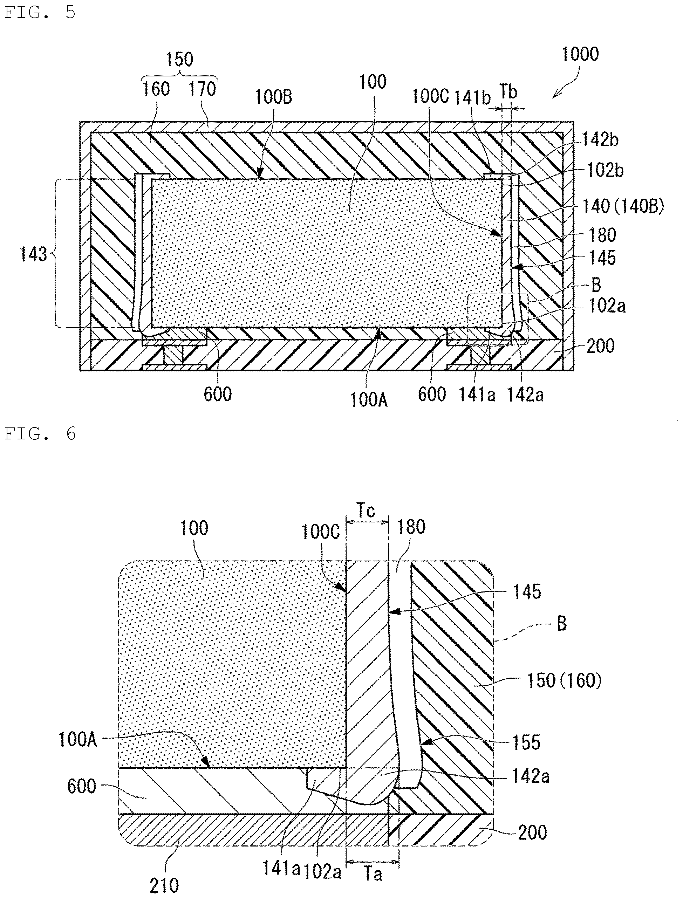

FIG. 5 is a cross-sectional view schematically illustrating a packaged solid-state battery according to another embodiment. In one embodiment, the end surface electrode 140 may extend to at least one of the first main surface 100A and the second main surface 100B of the solid-state battery. That is, the end portion 141 of the end surface electrode may extend to at least one of the first main surface 100A and the second main surface 100B of the solid-state battery. According to such a structure, the end surface electrode extends to the first main surface 100A, whereby the bonding area between the end surface electrode 140 and the bonding member 600 can be further increased. Therefore, the above-described structure can contribute to improvement of connection reliability between the end surface electrode 140 and the bonding member 600.

The exterior portion 150 may be in contact with the end surface electrode 140 at the end portion 141 of the end surface electrode positioned on the first main surface 100A and/or the second main surface 100B. That is, the contact portion between the exterior portion 150 and the end surface electrode 140 may be positioned at the end portion 141 of the end surface electrode extending on the first main surface 100A and/or the second main surface 100B.

According to such a structure, the end surface electrode 140 may extend along the side surface 100C and the first main surface 100A and/or the second main surface 100B of the solid-state battery. That is, the joint area between the end surface electrode 140 and the solid-state battery 100 becomes larger, whereby it is possible to suitably prevent the end surface electrode from being peeled off due to the volume change of the solid-state battery. Further, the exterior portion 150 and the end surface electrode 140 are joined to each other at the end portion 141 of the end surface electrode extending on the first main surface 100A and/or the second main surface 100B, whereby the end surface electrode 140 can be suitably sandwiched on the solid-state battery 100 by the exterior portion 150. As a result, peeling of the end surface electrode from the solid-state battery due to expansion and contraction of the solid-state battery can be more suitably prevented.

FIG. 4 is an enlarged sectional view schematically showing a boundary region between the end surface electrode 140 and exterior portion 150 according to another exemplary embodiment of the present disclosure. As shown, the packaged solid-state battery may include a plurality of the gap portion 180. A plurality of the gap portions 180 may be intermittently formed along the end surface electrode 140. That is, a plurality of the gap portions 180 may be intermittently formed by providing a plurality of the contact portions 145B and a plurality of the non-contact portions 145A with the exterior portion 150 in the end surface electrode 140.

In the "intermittently formed gap portion" in the present description, a plurality of the gap portions 180 are not each independently necessarily formed. For example, in a cross-sectional view, a plurality of the gap portions 180 may be in a state where adjacent gap portions 180 are partly connected to each other. This means that an inner side surface 155 of the exterior portion facing the end surface electrode 140 may be a surface including irregularities in a cross-sectional view. For example, the contact portion 145B and non-contact portion 145A between the end surface electrode 140 and the exterior portion 150 may be alternately and repeatedly provided. In such a structure, a plurality of the gap portions 180 may be provided irregularly or substantially regularly along the end surface electrode.

As described above, when the packaged solid-state battery intermittently includes a plurality of the gap portions 180, the non-contact portion 145A in which the end surface electrode 140 is not constrained by the exterior portion 150 is provided at a plurality of positions of the end surface electrode 140, whereby it is possible to avoid localization of the non-constrained portion and the constrained portion of the end surface electrode. Therefore, distortion occurring in the end surface electrode due to expansion and contraction of the solid-state battery is more effectively alleviated as a whole, and the risk of breakage of the end surface electrode can be suitably reduced. In addition, providing the contact portions 145B at a plurality of positions while securing the non-contact portions 145 A allows to suppress the occurrence of distortion in the end surface electrode 145 by the non-contact portion 145A and to suitably hold the end surface electrode 145 in the solid-state battery 100 by the contact portion 145B.

In a preferred aspect, in cross-sectional view, the gap portion 180 has an elongated shape extending along the end surface electrode 140. In other words, the cross-sectional shape of the gap portion 180 may be an elongated shape or a flat shape along the extending direction of the end surface electrode 140. Further, in the embodiment having a plurality of the gap portions 180, the cross-sectional shapes of the gap portions 180 are not necessarily the same, and may have different cross-sectional shapes. For example, the cross-sectional shapes of a plurality of the gap portions 180 may be long shapes having different dimensions.

The gap portion 180 having an elongated cross-sectional view shape may extend along the main surface region 143 of the end surface electrode. In a preferred aspect, the gap portion 180 has an elongated cross-sectional shape extending along the outer side surface 145 of the main surface region 143 of the end surface electrode. The "main surface region of the end surface electrode" in the present description means a region of the end surface electrode 140 located on the side surface 100C of the solid-state battery. That is, the gap portion 180 may be located on the end surface electrode 140 located on the side surface 100C of the solid-state battery. With such a structure, the end surface electrode 140 is separated from the exterior portion 150 in a wider region, and the restraint of the end surface electrode 140 by the exterior portion 150 can be alleviated more effectively. Therefore, the end surface electrode can more suitably follow the volume change of the solid-state battery, and distortion that can occur in the end surface electrode is suppressed, thereby allowing to reduce the risk of breakage of the end surface electrode.

The cross-sectional shape of the gap portion 180 may correspond to the cross-sectional shape of the outer side surface 145 of the end surface electrode. Specifically, in cross-sectional view, the gap portion 180 may have a shape corresponding to the cross-sectional shape of the outer contour forming surface of the end surface electrode 140. For example, as shown in FIG. 6, when the outer side surface 145 of the end surface electrode has a curved cross-sectional shape, the gap portion 180 may have an elongated cross-sectional shape curved along the curved portion. According to such a structure, in cross-sectional view, the gap portion 180 can extend along the outer side surface 145 of the end surface electrode so as to have a constant width. That is, the end surface electrode 140 and exterior portion 150 may include portions facing each other with a certain interval. As a result, the restraint force of the end surface electrode 140 by the exterior portion 150 is more suitably reduced, and thus when deformation occurs in the end surface electrode 140 due to expansion and contraction of the solid-state battery 100, excessive distortion does not occur in the end surface electrode 140, and the risk of breakage of the end surface electrode 140 can be reduced.

In one embodiment, the gap portion 180 may be continuous over the entire main surface region 143 of the end surface electrode. In other words, the end surface electrode 140 may face the exterior portion 150 separately over the entire main surface region 143. In such an embodiment, as shown in FIGS. 2 and 5, the gap portion 180 may have an elongated cross-sectional view shape extending over the main surface region 143 of the end surface electrode. Although not illustrated, the gap portion 180 may communicate not only in the plan view direction but also in the cross-sectional view direction. That is, the gap portion 180 may be two-dimensionally continuous over the main surface region 143 of the end surface electrode. With such a structure, the restraint of the end surface electrode by the exterior portion is more effectively alleviated, and the end surface electrode can more suitably follow the volume change of the solid-state battery. Therefore, the present disclosure can provide a more suitable packaged solid-state battery in which distortion that can occur in the end surface electrode is reduced and a risk of breakage of the end surface electrode due to a volume change of the solid-state battery is reduced.

In cross-sectional view, the width W of the gap portion 180 may be 1 µm or more and 50 µm or less, 1 µm or more and 30 µm or less, or 1 µm or more and 25 µm or less, and can be, for example, 2 µm or more and 10 µm or less (refer to FIG. 3). Herein, the width W of the gap portion can also be understood as a distance at which the end surface electrode 140 and the exterior portion 150 face each other while being separated from each other by the gap portion 180. It should be noted that the width W of the gap portion can be appropriately changed depending on the size of the solid-state battery, the thickness of the end surface electrode, the thickness of the exterior portion, and the like. For example, as illustrated in FIG. 4, a plurality of the gap portions 180 may have different widths.

In the cross-sectional view, the non-contact portion 145A between the exterior portion 150 and the end surface electrode 140 may be larger than the contact portion 145B (refer to FIG. 4). That is, the contact ratio between the exterior portion 150 and the end surface electrode 140 may be less than 50%. In other words, the non-contact portion 145A may occupy 50% or more of the outer side surface 145 of the end surface electrode. For example, in a cross-sectional view, a ratio of the non-contact portion 145A to the outer side surface length of the end surface electrode may be 50% or more and 100% or less, 60% or more and 99% or less, or 65% or more and 99% or less, and may be, for example, 70% or more and 95% or less. In a cross-sectional view, when the non-contact portion 145A occupying the entire length of the outer side surface 145 of the end surface electrode falls within the above-described range, the end surface electrode can suitably follow expansion and contraction of the solid-state battery, and a risk of breakage of the end surface electrode due to a volume change of the solid-state battery can be reduced.

As shown in FIG. 5, the end surface electrode 140 may be provided so as to cover a corner portion of the solid-state battery. In the present description, the "corner portion of the solid-state battery" means a corner portion between the main surface 100A or 100B and the side surface 100C of the solid-state battery, and includes both a vertex corner portion at which the main surface 100A or 100B intersects the two side surfaces 100C and a ridge corner portion between the main surface 100A or 100B and the side surface 100C. Specifically, the solid-state battery 100 may include a first corner 102a located on the proximal side with respect to the substrate 200 and a second corner 102b located on the distal side with respect to the substrate 200, and the end surface electrode 140 may be provided so as to cover at least one of the first corner 102a and the second corner 102b. In such an embodiment, the end surface electrode 140 covering the first corner 102a can be referred to as a first corner covered region 142a, and the end surface electrode 140 covering the second corner 102b can be referred to as a second corner covered region 142b.

FIG. 6 is an enlarged cross-sectional view schematically showing a portion B which is a connection portion between the end surface electrode 140 and the bonding member in the packaged solid-state battery 1000 shown in FIG. 5. In the cross-sectional view, the thickness Ta of the first corner covered region 142a may be larger than the thickness of the other region other than the first corner covered region 142a. Herein, the thickness of the corner covered region means the thickness of the end surface electrode 140 in the extending direction of the main surface of the solid-state battery. Specifically, this means the distance from the contact point between the corner of the solid-state battery covered by the corner covered region and the inner surface of the end surface electrode 140 to the intersection point between the extension line in the extending direction of the main surface of the solid-state battery and the outer side surface 145 of the end surface electrode. As shown in FIG. **6****,** in cross-sectional view, the end surface electrode 140 covering the first corner 102a may have a larger thickness than other regions. In other words, in cross-sectional view, the end surface electrode 140 may be provided so as to be relatively thick in the first corner covered region 142a.

Among stresses caused by expansion and contraction of the solid-state battery 100, stress acting from the solid-state battery 100 side to the substrate 200 side can increase from the solid-state battery 100 toward the end surface electrode 140 side. That is, of the stress acting from the solid-state battery 100 side to the substrate 200 side, the stress along the end surface electrode 140 may be relatively the largest. In particular, in the first corner covered region 142a covering the first corner 102a located on the substrate 200 side, a larger stress can act, and thus there is a possibility of breakage due to such stress. In the present disclosure, as described above, providing the end surface electrode having a relatively large thickness in the first corner covered region 142a allows to provide a packaged solid-state battery having improved connection reliability of the end surface electrode.

More specifically, in cross-sectional view, the thickness Ta of the first corner covered region 142a of the end surface electrode may be larger than the thickness Tb (refer to FIG. 5) of the second corner covered region 142b located on the distal side with respect to the substrate 200. As described above, the stress caused by the expansion and contraction of the solid-state battery can be larger on the first corner 102a side located on the proximal side with respect to the connection point with the substrate 200 than the second corner 102b located on the second main surface 100B side of the solid-state battery. Therefore, in cross-sectional view, the first corner covered region 142a may have a thickness larger than that of the second corner covered region 142b. According to such a structure, a packaged solid-state battery having a reduced risk of breakage of the end surface electrode in the corner covered region can be provided.

In cross-sectional view, the ratio of the thickness Ta of the first corner covered region 142a to the thickness Tb of the second corner covered region 142b of the end surface electrode may be 101% or more and 500% or less, 200% or more and 400% or less, or 280% or more and 370% or less, and can be, for example, 300% or more and 350% or less. When the thickness Ta of the first corner covered region 142a of the end surface electrode falls within the above-described range in cross-sectional view, a packaged solid-state battery having improved connection reliability of the end surface electrode can be provided.

Further, in cross-sectional view, the thickness Ta of the end surface electrode 140 in the first corner covered region 142a may be larger than the thickness Tc of the end surface electrode 140 in the main surface region 143 located on the side surface 100C of the solid-state battery. In a preferred aspect, as shown in FIGS. 5 and 6, in cross-sectional view, the thickness of the end surface electrode 140 may gradually increase from the region on the substrate 200 side in the main surface region to the first corner covered region 142a. According to such a structure, a packaged solid-state battery having a reduced risk of breakage of the end surface electrode in the corner covered region can be provided.

The structure of the packaged solid-state battery in the present description may be a structure in which a cross section in a cross-sectional view direction is cut out by an ion milling apparatus (model number SU-8040 manufactured by Hitachi High-Technologies Corporation) and observed from an image acquired using a scanning electron microscope (SEM) (model number SU-8040 manufactured by Hitachi High-Technologies Corporation). In addition, the dimensions and the like of the gap portion and the end surface electrode referred to in the present description may refer to values calculated from dimensions measured from the image acquired by the above-described method.

### [Method for producing packaged solid-state battery]

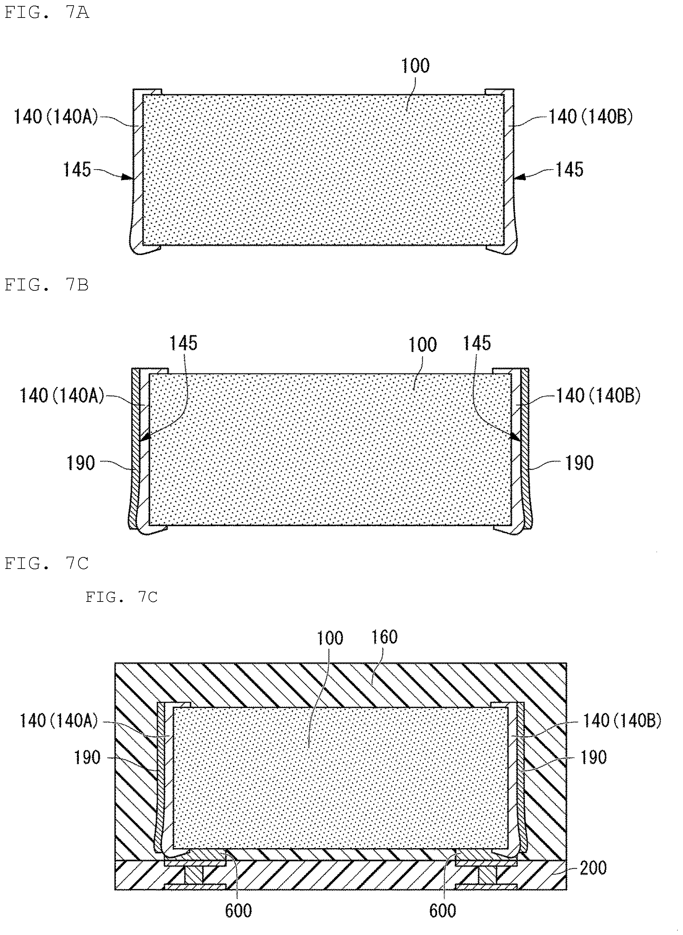

The objective product according to the present disclosure can be obtained through a process of preparing a solid-state battery that includes battery constituent units including a positive electrode layer, a negative electrode layer, and a solid electrolyte between the electrodes and next packaging the solid-state battery (refer to FIGS. 7A to 7E).

The manufacture of the solid-state battery according to the present disclosure can be roughly divided into: manufacturing a solid-state battery itself corresponding to a stage prior to packaging (hereinafter, also referred to as an "unpackaged battery"); preparing a substrate; and packaging.

### <<Method for Manufacturing Unpackaged battery>>

The unpackaged battery can be manufactured by a printing method such as screen printing, a green sheet method using a green sheet, or a combined method thereof. More particularly, the unpackaged battery itself may be fabricated in accordance with a conventional method for manufacturing a solid-state battery (thus, for raw materials such as the solid electrolyte, organic binder, solvent, optional additives, positive electrode active material, and negative electrode active material described below, those for use in the manufacture of known solid-state batteries may be used).

Hereinafter, for better understanding of the present disclosure, a manufacturing method will be exemplified and described, but the present disclosure is not limited to this method. In addition, the following time-dependent matters such as the order of descriptions are merely considered for convenience of explanation, and the present invention is not necessarily bound by the matters.

### (Formation of stack block)

· The solid electrolyte, the organic binder, the solvent, and optional additives are mixed to prepare a slurry. Then, from the prepared slurry, sheets including the solid electrolyte are formed by firing.
· The positive electrode active material, the solid electrolyte, the conductive material, the organic binder, the solvent, and optional additives are mixed to prepare a positive electrode paste. Similarly, the negative electrode active material, the solid electrolyte, the conductive material, the organic binder, the solvent, and optional additives are mixed to prepare a negative electrode paste.
· The positive electrode paste is applied by printing onto the sheet, and a current collecting layer and/or a negative layer are applied by printing, if necessary. Similarly, the negative electrode paste is applied by printing onto the sheet, and a current collecting layer and/or a negative layer are applied by printing, if necessary.
· The sheet with the positive electrode paste applied by printing and the sheet with the negative electrode paste applied by printing are alternately stacked to obtain a stacked body. Further, the outermost layer (the uppermost layer and/or the lowermost layer) of the laminate may be an electrolyte layer, an insulating layer, or an electrode layer.

### (Formation of battery fired body)

The stacked body is integrated by pressure bonding, and then cut into a predetermined size. The cut stacked body obtained is subjected to degreasing and firing. Thus, a fired stacked body is obtained. The stacked body may be subjected to degreasing and firing before cutting, and then cut.

### (Formation of end surface electrode)

The end surface electrode 140A on the positive electrode side can be formed by applying a conductive paste to the positive electrode-exposed side surface of the fired stacked body. Similarly, the end surface electrode 140B on the negative electrode side can be formed by applying a conductive paste to the negative electrode-exposed side surface of the fired stacked body. As shown in FIG. 7A, the end surface electrodes 140 on the positive electrode side and the negative electrode side may be provided so as to extend to the main surface of the fired stacked body. The ingredient for the end surface electrode can be selected from at least one selected from silver, gold, platinum, aluminum, copper, tin, and nickel.

Further, the end surface electrodes 140 on the positive electrode side and the negative electrode side are not limited to being formed after firing the stacked body, and may be formed before the firing and subjected to simultaneous firing.

Through the steps described above, a desired unpackaged battery (corresponding to the solid-state battery 100 illustrated in FIG. 7A) can be finally obtained.

### (Gap portion forming processing)

Then, the outer side surface 145 of the end surface electrode may be subjected to processing for forming a gap portion between the end surface electrode 140 and the exterior portion. The gap portion between the end surface electrode 140 and the exterior portion may be formed by applying a gap forming agent 190 before forming the exterior portion (refer to FIG. 7B). For example, after the end surface electrode 140 is formed, a gap forming agent 190 for forming a gap portion may be applied to the end surface electrode 140. The gap forming agent 190 may be applied only to a portion where a gap portion is provided on the end surface electrode 140. For example, the gap forming agent 190 may be applied over the entire end surface electrode 140, or may be applied only to a partial region of the end surface electrode, for example, only to a main surface region 143 (refer to FIG. 5) of the end surface electrode located on a side surface of the solid-state battery.

An example of the gap forming agent to be used may be, for example, a known material that vaporizes near a heating temperature in molding for forming a covering insulating layer 160 (refer to FIG. 7C) to be described later. As such a gap forming agent, any material may be selected according to the conditions for forming the covering insulating layer (for example, a heating temperature or the like). Although it is merely an example, examples of such gap forming agents include wax-based materials such as paraffin wax and microcrystalline wax. When such a gap forming agent is used, the gap forming agent vaporizes when heated in molding for forming the covering insulating layer, and disappears by penetrating into the covering insulating layer, and as a result, a gap portion is formed between the end surface electrode 140 and the covering insulating layer.

In addition, the gap forming agent may be a material that reduces adhesion between the end surface electrode 140 and the exterior portion. For example, the gap forming agent may be a known material that improves releasability of the exterior portion provided on the end surface electrode 140 from the end surface electrode. Although it is merely an example, examples of such a gap forming agent include a fluorine-based material, a silicone-based material, and a wax-based material. When such a gap forming agent is used, the exterior portion is separated from the end surface electrode 140 at the place where the gap forming agent is applied, and a gap portion is formed between the end surface electrode 140 and the exterior portion.

Alternatively, the gap forming agent may be a foamable material such as a foamed resin. The foamed resin may be a resin that foams to form a foam when the exterior portion is molded. The foamed resin is not particularly limited, and a known foamed resin used for foam molding of a resin can be employed. For example, the foamable material may be a thermoplastic resin in which at least one of a chemical foaming agent and foamed beads is blended. In the finally obtained packaged solid-state battery, it is preferable that the gap forming agent as described above does not remain, but the packaged solid-state battery may contain the gap forming agent.

### <<Preparation of substrate>>

In this step, the substrate is prepared.

Although not particularly limited, in the case of using a resin substrate as the substrate, the substrate may be prepared by stacking multiple layers and then performing heating and pressurizing treatments for the layers. For example, a substrate precursor is formed using a resin sheet made by impregnating a fiber cloth as a substrate with a resin raw material. After the formation of the substrate precursor, the substrate precursor is subjected to heating and pressurization with a press machine. In contrast, when a ceramic substrate is used as the substrate, for the preparation thereof, for example, a plurality of green sheets can be subjected to thermal pressure bonding to form a green sheet laminate, and the green sheet laminate can be subjected to firing, thereby providing a ceramic substrate. The ceramic substrate can be prepared, for example, in accordance with the preparation of an LTCC substrate. The ceramic substrate may have vias and/or lands. In such a case, for example, holes may be formed for the green sheet with a punch press, a carbon dioxide gas laser, or the like, and filled with a conductive paste material, or a conductive portion precursor such as vias or lands may be formed through implementation of a printing method or the like. Further, lands and the like can also be formed after firing the green sheet laminate.

Through the steps described above, the desired substrate 200 can be finally obtained.

### <<Packaging>>

Then, packaging is performed using the battery and substrate obtained as mentioned above (see FIGS. 7C to 7E).

First, the unpackaged battery 100 is placed on the substrate 200. More particularly, the "unpackaged solid-state battery" is placed on the substrate (hereinafter, the battery used for packaging is also simply referred to as a "solid-state battery").

Preferably, the solid-state battery 100 is disposed on the substrate so as to electrically connect the conductive portions of the substrate and the end surface electrode 140 of the solid-state battery 100 to each other. For example, a conductive paste may be provided on the substrate, thereby electrically connect the conductive portion of the substrate and the end surface electrode 140 of the solid-state battery 100 to each other. More specifically, alignment is performed such that the conductive portion (in particular, lower land/bottom land) on the positive electrode side and the negative electrode side of the main surface of the substrate are respectively matched with the end surface electrode 140 as the positive electrode and the negative electrode of the solid-state battery 100, and the portions and the electrodes are bonded and connected using a conductive paste (for example, Ag conductive paste). More particularly, a bonding member precursor that is responsible for electrical connection between the solid-state battery 100 and the substrate may be previously provided on the substrate.

Such a precursor for a bonding member can be provided by printing a conductive paste that requires no flux cleaning or the like after the formation, such as a nano-paste, an alloy-based paste, or a brazing material, in addition to the Ag conductive paste. Subsequently, the solid-state battery 100 is disposed on the substrate such that the end surface electrode 140 and the bonding member precursor are brought into contact with each other, and subjected to a heating treatment, thereby a bonding member that contributes to electrical connection between the solid-state battery 100 and the substrate is formed from the precursor.

Then, the exterior portion 150 is formed. As the exterior portion 150, the covering insulating layer 160 and the covering inorganic layer 170 may be provided.

First, the covering insulating layer 160 is formed so as to cover the solid-state battery 100 on substrate 200 (refer to FIG. 7C). Therefore, a raw material for the covering insulating layer is provided such that the solid-state battery 100 on the substrate is totally covered. When the covering insulating layer is made of a resin material, a resin precursor is provided on the substrate and subjected to curing or the like to mold the covering insulating layer. According to a preferred embodiment, the covering insulating layer may be molded by pressurization with a mold. By way of example only, a covering insulating layer for sealing the solid-state battery 100 on the substrate may be molded through compression molding. In a case of a resin material generally for use in molding, the form of the raw material for the covering insulating layer may be granular, and the type thereof may be thermoplastic. Such molding is not limited to die molding, and may be performed through polishing processing, laser processing, and/or chemical treatment.

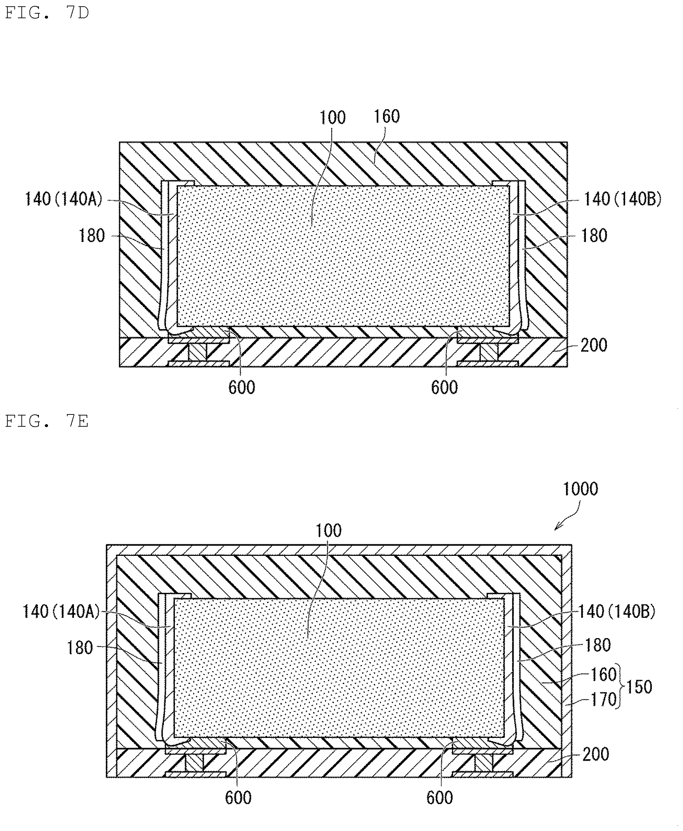

In the step of molding the covering insulating layer 160, the gap portion 180 is formed between the end surface electrode 140 and the covering insulating layer 160 by the gap forming agent 190 applied onto the end surface electrode 140 as described above (refer to FIG. 7D). For example, the gap portion 180 may be formed by vaporizing and dissipating the gap forming agent by heating in the molding step of the covering insulating layer 160.

After forming the covering insulating layer 160, a covering inorganic layer 170 is formed (refer to FIG. 7E). The covering inorganic layer 170 may be formed by plating the covering precursor. In an embodiment, the plating film is formed on the exposed surfaces of the covering precursor other than the bottom surface (that is, other than the bottom surface of the support substrate), thereby forming the covering inorganic layer on the covering precursor.

Through the above steps, it is possible to obtain a packaged product having a gap portion between the end surface electrode and the exterior portion. In other words, the "packaged solid-state battery" according to the present invention can be finally obtained.

Although not illustrated, the covering inorganic layer may extend to the substrate main surface on the bottom side located on the opposite side to the main surface of the substrate facing the solid-state battery. That is, the covering insulating layer and/or the covering inorganic layer may extend to the side surface of the substrate as the exterior portion, and may extend to the bottom side main surface (particularly, the peripheral edge portion thereof) of the substrate beyond the side surface. In the case of such a form, a packaged solid-state battery in which invasion of moisture from the outside to the solid-state battery is more suitably prevented can be provided.

The covering inorganic layer can also be provided as a plurality of structures including at least two layers. Such a multilayer structure is not particularly limited to between different types of materials, and may be between the same type of materials. For example, the covering inorganic layer may have a multilayer structure in which two or more layers of a dry plating film formed by dry plating and a wet plating film formed by wet plating are laminated in any order. When the covering inorganic layer having such a multilayer structure is provided, it is easy to more suitably configure the water vapor barrier for the solid-state battery.

Further, the substrate may have a water vapor barrier layer formed. More particularly, a water vapor barrier may be formed on the substrate prior to the packaging, in which the substrate and the solid-state battery are combined.

The water vapor barrier layer is not particularly limited as long as a desired barrier layer can be formed. For example, in the case of "a water vapor barrier layer having Si-O bonds and Si-N bonds", the water vapor barrier layer is preferably formed through application of a liquid raw material and ultraviolet irradiation. More particularly, the water vapor barrier layer is formed under a relatively low temperature condition (for example, a temperature condition of about 100°C) without using any vapor-phase deposition method such as CVD or PVD.

Specifically, a raw material containing, for example, silazane is prepared as a liquid raw material, and the liquid raw material is applied to the substrate by spin coating, spray coating, or the like, and dried to form a barrier precursor. Then, the barrier precursor can be subjected to UV irradiation in an environmental atmosphere containing nitrogen, thereby providing the "water vapor barrier layer having Si-O bonds and Si-N bonds".

In order that the water vapor barrier layer is not present at the bonding site between the conductive portions of the substrate and the end surface electrodes of the solid-state battery, it is preferable to locally remove the barrier layer at the site. Alternatively, a mask may be used so that the water vapor barrier layer is not formed at the bonding site. More particularly, the water vapor barrier layer may be totally formed with a mask applied to the region for the bonding site, and then the mask may be removed.

Although the embodiments of the present disclosure have been described above, typical examples have been only illustrated. Those skilled in the art will easily understand that the present disclosure is not limited thereto, and various embodiments are conceivable without changing the scope of the present disclosure.

It is to be noted that an embodiment of the present disclosure as described above encompasses the following preferable aspects.

### First aspect:

A packaged solid-state battery incruding:
a substrate;
a solid-state battery with an end surface electrode provided on the substrate; and
an exterior portion covering the solid-state battery,
in which the exterior portion includes a resin and
a gap portion is included between the end surface electrode and the exterior portion.

### Second aspect:

The packaged solid-state battery according to the above first aspect, including a portion in which the solid-state battery and the exterior portion face each other while being separated from each other and a portion in which the solid-state battery and the exterior portion are in contact with each other, in which the portion in which the solid-state battery and the exterior portion face each other while being separated from each other is located between the end surface electrode and the exterior portion.

### Third aspect:

The packaged solid-state battery according to the above first aspect or the above second aspect, in which the gap portion is between the exterior portion and at least one of the end surface electrode on a positive electrode side and the end surface electrode on a negative electrode side.

### Fourth aspect:

The packaged solid-state battery according to any of the above first aspect to the above third aspect, in which a plurality of the gap portions are intermittently formed along the end surface electrode.

### Fifth aspect:

The packaged solid-state battery according to any of the above first aspect to the above fourth aspect, in which the end surface electrode includes a contact portion and a non-contact portion with the exterior portion.

### Sixth aspect:

The packaged solid-state battery according to the above fifth aspect, in which the contact portion is positioned at least one of a top surface side end portion of an end surface electrode located distal to the substrate and a substrate side end portion located proximal to the substrate.

### Seventh aspect:

The packaged solid-state battery according to the fifth aspect to sixth aspect, in which the solid-state battery includes a first main surface facing a substrate and a second main surface positioned to face the first main surface,
the end portion of the end surface electrode extends over at least one of the first main surface and the second main surface, and
the contact portion is positioned at the end portion.

### Eighth aspect:

The packaged solid-state battery according to any of the above first aspect to seventh aspect, in which the gap portion has an elongated shape extending along a main surface region of the end surface electrode in cross-sectional view.

### Ninth aspect:

The packaged solid-state battery according to any of the above first aspect to eighth aspect, in which the gap portion is continuous over the entire main surface region of the end surface electrode.

### Tenth aspect:

The packaged solid-state battery according to any of the above first aspect to the above ninth aspect, in which the exterior portion includes a covering insulating layer covering the solid-state battery, and the end surface electrode and the covering insulating layer face each other while being separated from each other with the gap portion interposed therebetween.

### Eleventh aspect:

The packaged solid-state battery according to any of the above first aspect to the above tenth aspect, in which the cross-sectional shape of the gap portion corresponds to the cross-sectional shape of the outer side surface of the end surface electrode.

### Twelfth aspect:

The packaged solid-state battery according to any of the first aspect to the above eleventh aspect, in which an occupation ratio of the non-contact portion on an outer side surface of the end surface electrode is 50% or more and 100% or less in a cross-sectional view.

### Thirteenth aspect:

The packaged solid-state battery according to any of the above first aspect to the above twelfth aspect, in which the solid-state battery includes a first corner located on a proximal side with respect to the substrate,
the end surface electrode includes a first corner covered region covering the first corner, and
a thickness of the first corner covered region is larger than a thickness of a region other than the first corner covered region in a cross-sectional view.

### Fourteenth aspect:

The packaged solid-state battery according to the above thirteenth aspect, in which
the solid-state battery includes a second corner located on a distal side with respect to the substrate, and
the end surface electrode includes a second corner covered region covering the second corner, and the other region is the second corner covered region.

### Fifteenth aspect:

The packaged solid-state battery according to the above twelfth aspect or the thirteenth aspect, in which the other region is a main surface region of the end surface electrode.

### INDUSTRIAL APPLICABILITY

The packaged solid-state battery of the present disclosure can be used in various fields in which battery use or electricity storage is assumed. By way of example only, the packaged solid-state battery according to the present disclosure can be used in the fields of electricity, information, and communication in which mobile devices and the like are used (such as the field of electric/electronic devices and the field of mobile devices including small electronic devices such as mobile phones, smartphones, notebook computers and digital cameras, activity trackers, arm computers, electronic paper, RFID tags, card-type electronic money, and smartwatches), home and small industrial applications (such as the fields of power tools, golf carts, and home, nursing, and industrial robots), large industrial applications (such as the fields of forklifts, elevators, and harbor cranes), the field of transportation systems (such as the fields of hybrid vehicles, electric vehicles, buses, trains, power-assisted bicycles, and electric two-wheeled vehicles), power system applications (such as the fields of various types of power generation, road conditioners, smart grids, and home energy storage systems), medical applications (field of medical equipment such as earphone hearing aids), pharmaceutical applications (fields such as dosage management systems), IoT fields, space and deep sea applications (such as the fields of space probes and submersibles), and the like.

### DESCRIPTION OF REFERENCE SYMBOLS

100: Solid-state battery
100A: First main surface of solid-state battery
100B: Second main surface of solid-state battery
100C: Side surface of solid-state battery
102a: First corner of solid-state battery
102b: Second corner of solid-state battery
110: Positive electrode layer
120: Negative electrode layer
130: Solid electrolyte or solid electrolyte layer
140: End surface electrode
140A: Positive-electrode-side end surface electrode
140B: Negative-electrode-side end surface electrode
141a: Top-surface-side end portion
141b: Bottom-surface-side corner portion
142a: First corner covered region
142b: Second corner covered region
143: Main surface region of end surface electrode
145: Outer side surface of end surface electrode
145A: Non-contact portion
145B: Contact portion
150: Exterior portion
155: Inner surface of exterior portion
160: Covering insulating layer
170: Covering inorganic layer
180: Gap portion
190: Gap forming agent
200: Substrate
210: Substrate electrode layer (upper side of substrate)
210A: Positive-electrode-side substrate electrode layer
210B: Negative-electrode-side substrate electrode layer
220: Substrate electrode layer on mounting side (lower side of substrate)
220A: Positive-electrode-side substrate electrode layer on mounting side
220B: Negative-electrode-side substrate electrode layer on mounting side
250: Side surface of substrate
600: Bonding member
1000: Packaged solid-state battery

## Claims

1. A packaged solid-state battery comprising:
a substrate;
a solid-state battery with an end surface electrode provided on the substrate; and
an exterior portion covering the solid-state battery,
wherein the exterior portion includes a resin and
a gap portion is included between the end surface electrode and the exterior portion.

2. The packaged solid-state battery according to claim 1, comprising a portion in which the solid-state battery and the exterior portion face each other while being separated from each other and a portion in which the solid-state battery and the exterior portion are in contact with each other, wherein the portion in which the solid-state battery and the exterior portion face each other while being separated from each other is located between the end surface electrode and the exterior portion.

3. The packaged solid-state battery according to claim 1 or 2, wherein the gap portion is between the exterior portion and at least one of the end surface electrode on a positive electrode side and the end surface electrode on a negative electrode side.

4. The packaged solid-state battery according to any of claims 1 to 3, wherein the end surface electrode includes a contact portion and a non-contact portion with the exterior portion.

5. The packaged solid-state battery according claim 4, wherein the contact portion is positioned at least one of a top surface side end portion of an end surface electrode located distal to the substrate and a substrate side end portion located proximal to the substrate.

6. The packaged solid-state battery according to claim 4, wherein the solid-state battery includes a first main surface facing a substrate and a second main surface positioned to face the first main surface,
the end portion of the end surface electrode extends over at least one of the first main surface and the second main surface, and
the contact portion is positioned at the end portion.

7. The packaged solid-state battery according to any one of claims 4 to 6, wherein an occupation ratio of the non-contact portion on an outer side surface of the end surface electrode is 50% or more and 100% or less in cross-sectional view.

8. The packaged solid-state battery according to any one of claims 1 to 7, wherein the gap portion has an elongated shape extending along a main surface region of the end surface electrode in cross-sectional view.

9. The packaged solid-state battery according to any of claims 1 to 8, wherein a plurality of the gap portions are intermittently formed along the end surface electrode.

10. The packaged solid-state battery according to any of claims 1 to 8, wherein the gap portion is continuous over an entire main surface region of the end surface electrode.

11. The packaged solid-state battery according to any one of claims 1 to 10, wherein the exterior portion includes a covering insulating layer covering the solid-state battery, and the end surface electrode and the covering insulating layer face each other while being separated from each other with the gap portion interposed therebetween.

12. The packaged solid-state battery according to any one of claims 1 to 11, wherein a cross-sectional shape of the gap portion corresponds to a cross-sectional shape of an outer side surface of the end surface electrode.

13. The packaged solid-state battery according to any one of claims 1 to 12, wherein the solid-state battery includes a first corner located on a proximal side with respect to the substrate,
the end surface electrode includes a first corner covered region covering the first corner, and
a thickness of the first corner covered region is larger than a thickness of a region other than the first corner covered region in a cross-sectional view.

14. The packaged solid-state battery according to claim 13, wherein
the solid-state battery includes a second corner located on a distal side with respect to the substrate, and
the end surface electrode includes a second corner covered region covering the second corner, and the other region is the second corner covered region.

15. The packaged solid-state battery according to claim 13, wherein the other region is a main surface region of the end surface electrode.
